# EUROPEAN PATENT APPLICATION

(11) **EP 1 865 490 A1**
(43) Date of publication of application: **12.12.2007**
(21) Application number: 07107947.9
(22) Date of filing: 10.05.2007
(51) Int. Cl.: G09G 5/00, G06F 3/14, G06F 1/32

(54) **Display apparatus and control method thereof**

(30) Priority: 08.06.2006 KR 20060051433
(71) Applicant: Samsung Electronics Co., Ltd., Suwon-si, Gyeonggi-Do (KR)
(72) Inventor: Jung, Jae-woong, Yeongtong-dong, Yeongtong-gu Suwon-si Gyeonggi-do (KR)
(74) Representative: Perkins, Dawn Elizabeth

(57) **Abstract**

Disclosed is a display apparatus (10) comprising a video processing part (12) that processes a video signal input from an external apparatus (200), the external apparatus supplying the video signal and a control signal; a video displaying part (13) that displays the video signal processed by the video processing part; a storing part (11) that stores an ID of the display apparatus, the ID being input by a user; and a controller (14) that controls to supply power to the video displaying part after a delay time corresponding to the ID when the control signal is applied to the controller. With this configuration, the display apparatus can operate with its delay time calculated based on an ID of the display apparatus and a delay constant without adding a separate circuit.

## Description

The present invention relates to a display apparatus and a control method thereof, and more particularly, to a display apparatus which is capable of receiving a control signal and a video signal from the outside, and a control method thereof.

In a conventional multi-display system using a plurality of display apparatuses, when power is supplied to all the display apparatuses to display videos, a power supply may become overloaded. This may make it difficult for the power supply to supply sufficient power to the display apparatuses, or may eventually cause problems in the multi-display system.

As a preventive measure against such problems, the conventional multi-display system utilizes a high-capacity power supply for sufficiently supplying power to the plurality of display apparatuses or reserves a power application time for each display apparatus using a timer.

When such as a timer is used, it has to be set for all of the display apparatuses to be powered on with a time difference therebetween. In addition, when the display apparatuses are powered off due to power failure or the like, a reserved time for a display apparatus having no Real Time Clock (RTC) circuit is lost.

However, installing an RTC circuit for all of the display apparatuses to prevent the loss of a reserved time for any of the plurality of display apparatuses leads to an increase in product cost.

Accordingly, it is an aspect of the present invention to provide a display apparatus which is capable of operating with a delay time through a calculation according to an identification (ID) of the display apparatus without adding a separate circuit, and a control method thereof.

The foregoing and/or other aspects of the present invention can be achieved by providing a display apparatus comprising: a video processing part that processes a video signal input from an external apparatus, the external apparatus supplying the video signal and a control signal to the display apparatus; a video displaying part that displays the video signal processed by the video processing part; a storing part that stores an ID of the display apparatus, wherein the ID is input by a user; and a controller that controls power supply to the video displaying part after a delay time corresponding to the ID of the display apparatus, when the control signal is applied to the controller.

The control signal may comprise a power application signal for applying power to the display apparatus.

The controller may perform calculation of the delay time for the ID based on the ID and a predetermined delay constant and sets the delay time based on a result of the calculation.

When the ID of the display apparatus is not stored in the storing part, the controller may control the video processing part to display the video signal without the delay time.

When the ID of the display apparatus is not stored in the storing part, the controller may control the video processing part to generate a User Interface (UI) screen to allow the user to set the ID.

If the ID of the display apparatus is not stored in the storing part, the controller may control the video processing part to generate a selection screen to allow the user to choose whether to set the ID or display the video signal without the delay time.

Another aspect of the present invention can be also achieved by providing a control method of a display apparatus, comprising: receiving a video signal and a control signal from an external apparatus; and supplying power to a video display part of the display apparatus after a delay time corresponding to a pre-stored ID of the display apparatus when the control signal is received in the display apparatus.

The receiving the control signal may comprise receiving a power application signal for applying power to the display apparatus.

The delay time may be obtained through calculation of the delay time for the ID based on the ID and a predetermined delay constant.

The control method may further comprise: when there is no pre-stored ID for the display apparatus, supplying power to the video displaying part without the delay time.

The control method may further comprise: when there is no pre-stored ID for the display apparatus, generating a UI picture to allow a user to set the ID.

The control method may further comprise: when there is no pre-stored ID for the display apparatus, generating a selection screen to allow a user to choose whether to set the ID or display the video signal without the delay time.

The above and/or other aspects and advantages of the present invention will become apparent and more readily appreciated from the following description of the embodiments, taken in conjunction with the accompanying drawings of which:
Figure 1 is a view illustrating a multi-display system according to an exemplary embodiment of the present invention;
Figure 2 is a control block diagram of a display apparatus according to an exemplary embodiment of the present invention;
Figure 3 is a view showing an example of a UI screen for setting a delay time according to an exemplary embodiment of the present invention;
Figure 4 is a control flow chart illustrating an operation of an external apparatus according to an exemplary embodiment of the present invention; and
Figure 5 is a control flow chart illustrating an operation of a display apparatus according to an exemplary embodiment of the present invention.

Reference will now be made in detail to exemplary embodiments of the present invention, examples of which are illustrated in the accompanying drawings.

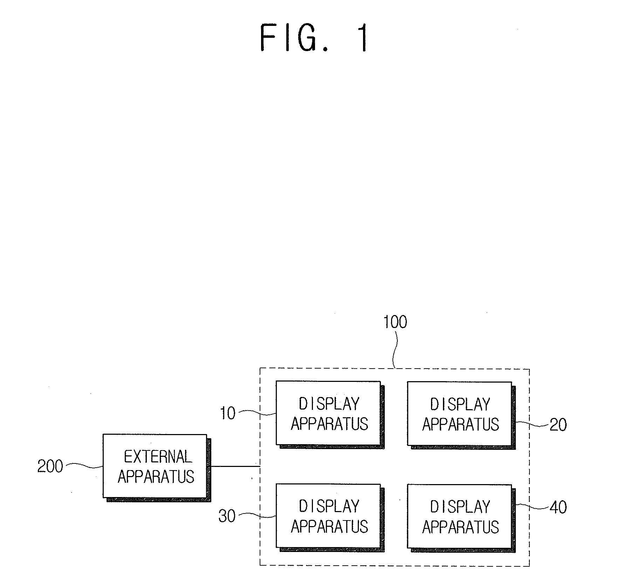

Figure 1 is a view illustrating a multi-display system according to an exemplary embodiment of the present invention.

As shown in Figure 1, a multi-display system may comprise an external apparatus 200 and a plurality of display apparatuses 10, 20, 30 and 40 (sometimes, generally indicated by 100).

The external apparatus 200 provides video signals to be displayed on the plurality of display apparatuses 100. The external apparatus 200 generates a whole image when the plurality of display apparatuses 100 are used as a single screen, and divides a video signal into a plurality of sub video signals to be displayed on the plurality of display apparatuses 10, 20, 30 and 40, respectively.

In this embodiment, the external apparatus 200 may comprise a video display device such as a videotape recorder (VTR), a digital video disc (DVD) player or the like to output a video signal, and a computer to output a power control signal to apply power to the display apparatuses 100 and the video signal.

The external apparatus 200 assigns unique IDs to the display apparatuses 10, 20, 30, and 40, respectively, to control the plurality of display apparatuses 100.

In this exemplary embodiment, the external apparatus 200 may assign the IDs to the display apparatuses 10, 20, 30, and 40, respectively, using a user input part (not shown) such as a remote controller, a keyboard, buttons or the like. Then, the external apparatus 200 may transmit the power control signal and the video signal to the display apparatuses 10, 20, 30 and 40.

For example, the external apparatus 200 may assign an ID "00" to the display apparatus 10, an ID "01" to the display apparatus 20, an ID "02" to the display apparatus 30, and an ID "03" to the display apparatus 40.

In this exemplary embodiment, the IDs of the display apparatuses 10, 20, 30, and 40 may be assigned as numerals corresponding to a predetermined time or characters corresponding to specified numerals.

For example, when the IDs of the display apparatuses 10, 20, 30 and 40 are assigned as alphabets, for example, A, B, C, and D, respectively, A, B, C, and D may correspond to numerals 1, 2, 3, and 4, respectively.

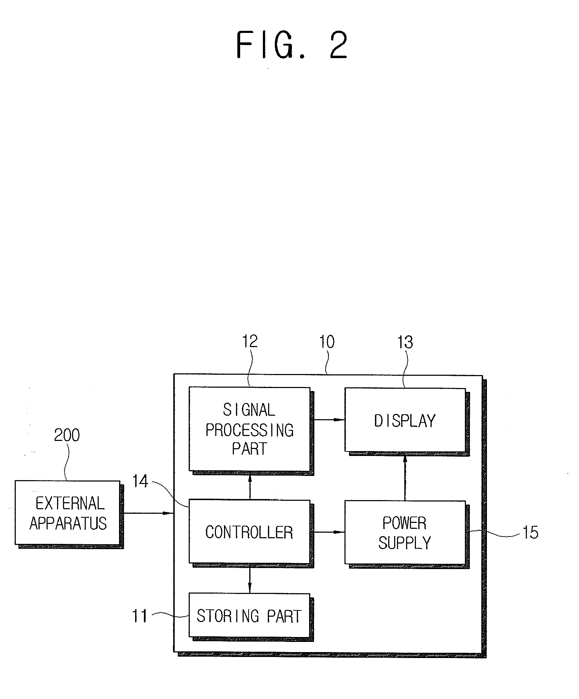

Figure 2 is a control block diagram of a display apparatus according to an exemplary embodiment of the present invention.

Hereinafter, description will be given on the basis of one of the display apparatuses 10, 20, 30, and 40 of the multi-display system display apparatus, for example, the display apparatus 10.

As shown in Figure 2, the display apparatus 10 is powered on according to a power application signal received from the external apparatus 200 for display of a video signal. The display apparatus 10 may comprise a storing part 11, a signal processing part 12, a display 13, and a controller 14.

The storing part 11 stores an ID of the display apparatus 10. In this embodiment, the storing part 11 may be embodied by a memory such as an Erasable Programmable Read-Only Memory (EPROM) for storing the ID assigned to the display apparatus by the external apparatus 200.

Alternatively, the storing part 11 may store an ID assigned to the display apparatus 10 when the display apparatus 10 is manufactured.

The signal processing part 12 converts the video signal input from the external apparatus 200 into a video signal of a different format that can be processed by the display 13, which will be described later. In this embodiment, the signal processing part 12 is controlled by the controller 14, which will be described later, and may comprise a scaler (not shown) that adjusts a size variable and a position variable of a video signal, and a signal converter (not shown) that converts the video signal input from the external apparatus 200 into a video signal that can be processed by the scaler.

The display 13 displays an image based on a video signal received from the signal processing part 12. The display 13 comprises a display panel on which the image is displayed, and a panel driver that processes the video signal input from the signal processing part 12, and displays the image on the display panel.

In this exemplary embodiment, the display 13 may include various types of displays, which are capable of adjusting size and position of an image, such as a Digital Light Processing (DLP), a Liquid Crystal Display (LCD), a Plasma Display Panel (PDP), and so on.

Upon receiving the power control signal and the video signal from the external apparatus 200, the controller 14 controls parts of the display apparatus 10 to perform relevant functions. In this exemplary embodiment, upon receiving the power application signal to apply power to the display apparatus 10 from the external apparatus 200, the controller 14 turns on the display apparatus 10 and controls the signal processing part 12 to display the received video signal on the display 13.

In addition, upon receiving the power application signal from the external apparatus 200, the controller 14 checks whether or not the ID of the display apparatus 10 is stored in the storing part 11.

According to an exemplary embodiment of the present invention, the multi-display system is illustrated as a video wall comprising the plurality of display apparatuses 100 by way of example. In this exemplary embodiment, the external apparatus 200 may assign IDs to the plurality of display apparatuses 100, respectively, and control the plurality of display apparatuses 100 according to the assigned IDs in order to divide one screen into several sub screens and display the several sub screens or in order to display different screens through the plurality of display apparatuses 100, respectively.

The controller 14 checks whether or not the IDs are stored in the storing part 11 and calculates delay times of the display apparatuses 10, 20, 30 and 40 according to the IDs. In this exemplary embodiment, a program for calculating the delay times is preset in the controller 14.

In this exemplary embodiment, a delay time calculation program is as follows:

```
 void Delay Time (vold)
 {
     BYTE Input ID = Getstatus():
     static BYTE constant = 10;
     BYTE Delaytime = 0:
 
     if (Input 10 = 0)
     {
        return Delaytime://NORMAL POWER ON SEQUENCE
     }
      else
              {
                     Delaytime= Input ID * constant
                     return Delaytime: //DELAY POWER ON SEQUENCE
               }
```

The controller 14 sets the delay times of the display apparatuses 10, 20, 30, and 40 according to values calculated by the above program.

If the controller 14 has no set delay constant, the controller 14 may send the external apparatus 200 a signal to request the external apparatus 200 to transmit a delay constant to the controller 14.

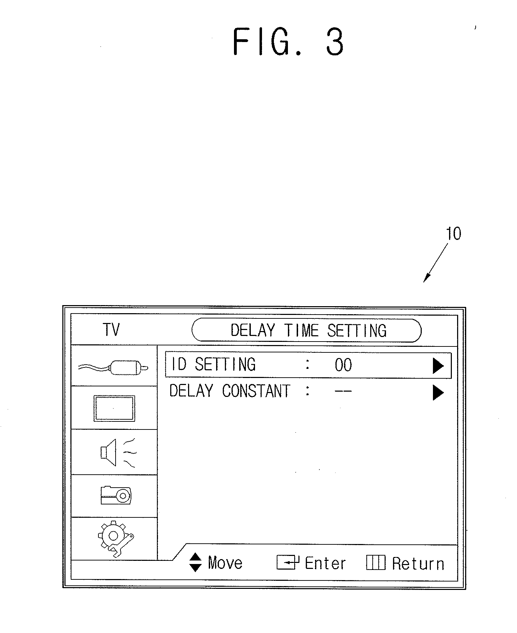

As shown in Figure 3, the external apparatus transmits a control signal to the display apparatus 10 to generate a UI screen to allow a user to set a delay constant of the display apparatus 10 in order to calculate a delay time of the display apparatus 10.

In this case, the user sets the delay constant through the user input part, such as a remote controller or the like, in order to calculate a desired delay time. Once the delay constant is set, the external apparatus 200 stores the set delay constant in the display apparatus 10.

In this exemplary embodiment, the delay constant may be set to be '10'.

With the delay constant of '10', the display apparatuses 10, 20, 30, and 40 may have the respective delay times calculated according to the above program as follows:
Delay time of display apparatus 10 = 00 * 10 = 0 seconds
Delay time of display apparatus 20 = 01 * 10 = 10 seconds
Delay time of display apparatus 30 = 02 * 10 = 20 seconds
Delay time of display apparatus 40 = 03 * 10 = 30 seconds

In this manner, upon receiving the power application signal from the external apparatus 200, the controller 14 calculates the delay times of the display apparatuses 10, 20, 30, and 40 based on the IDs stored in the storing part 11 and the set delay constant, turns a power supply 15 on in accordance with the delay times calculated by the controller 14, and then displays a video signal on the display 13.

Specifically, when the external apparatus 200 sends the power application signal to the plurality of display apparatuses 100, the display apparatuses 10, 20, 30, and 40 are powered on with a time difference therebetween, that is, the display apparatus 10 is immediately powered on, the display apparatus 20 is powered on 10 seconds after receiving the power application signal from the external apparatus 200, the display apparatus 30 is powered on 20 seconds after receiving the power application signal from the external apparatus 200, and the display apparatus 40 is powered on 30 seconds after receiving the power application signal from the external apparatus 200.

If there is no ID stored for a display apparatus in the storing part, the controller 14 may control the signal processing part 12 to display the video signal on the display 13 without any delay time according to a general power application order.

As an alternative exemplary embodiment, the controller 14 may transmit an ID request signal to set the IDs to the external apparatus 200.

Upon receiving the ID request signal from the display apparatus 10, the external apparatus 200 may display a UI screen, which allows the user to choose whether to generate an ID or display a video signal without any delay time, on the display apparatus 10.

In addition, the external apparatus 200 may check whether or not the plurality of display apparatuses 100 has a duplicated ID in order to avoid ID duplication. For example, the external apparatus 200 may determine whether or not an ID of the display apparatus 10, which is newly input, coincides with any of the IDs of the plurality of display apparatuses 100, and, if there is a duplicated ID, generate a UI screen or a warning sound to inform the user of such ID duplication.

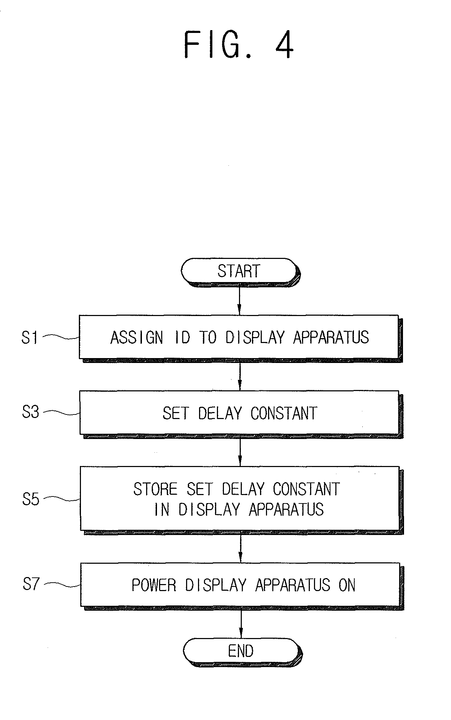

Figure 4 is a control flow chart illustrating an operation of the external apparatus 200 according to an exemplary embodiment of the present invention.

Referring to Figure 4, a user assigns IDs to the plurality of display apparatuses 100 through the external apparatus 200 at operation S1. The IDs of the display apparatuses 10, 20, 30, and 40 may be set to be numerals or characters corresponding to the numerals.

In addition, preset separate IDs of the display apparatuses 10, 20, 30, and 40 may be stored in the display apparatuses 10, 20, 30, and 40.

The user sets a delay constant to calculate delay times of the display apparatuses 10, 20, 30, and 40 so that the display apparatuses 10, 20, 30, and 40 can be powered on at different times at operation S3. The set delay constant is stored in the display apparatuses 10, 20, 30, and 40 at operation S5. In this case, the delay constant may be stored in the storing part 11 in which a program for calculating the delay times is stored.

The external apparatus 200 transmits a power application signal to the plurality of display apparatuses 100 having the respective IDs at operation S7. At this time, the power application signal is simultaneously applied to the plurality of display apparatuses 100.

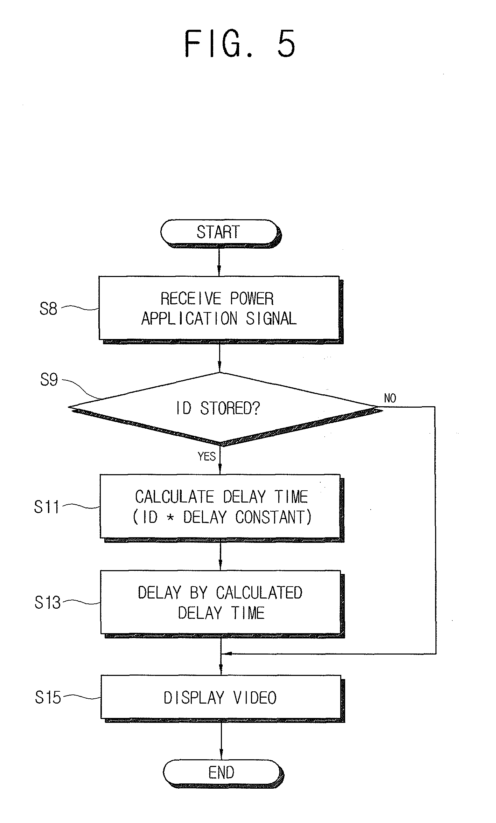

Figure 5 is a control flow chart illustrating an operation of the display apparatus 10 according to an exemplary embodiment of the present invention.

Hereinafter, description will be given on the basis of one of the display apparatuses 10, 20, 30, and 40 of the multi-display system display apparatus, for example, the display apparatus 10.

First, upon receiving the power application signal from the external apparatus 200 at operation S8, the controller 14 checks whether or not an ID of the display apparatus 10 is stored in the storing part 11 at operation S9.

If it is checked at the operation S9 that the ID is stored in the storing part 11, the controller 14 calculates a delay time according to a preset program at operation S11.

If there is no stored delay constant, the controller 14 may send the external apparatus 200 a signal to request the external apparatus 200 to transmit a delay constant to the controller 14.

After the delay time calculated at the operation S11 elapses at operation S13, the controller 14 turns on the display apparatus 10 and causes a video signal to be displayed on the display 13 at operation S15.

On the other hand, if it is checked at the operation S9 that the ID is not stored in the storing part 11, the controller 14 turns on the display apparatus 10 without any delay time and controls a video signal to be displayed on the display 13 at the operation S15.

As an alternative embodiment, if it is checked at the operation S9 that the ID is not stored in the storing part 11, the controller 14 may transmit an ID request signal to the external apparatus 200.

Upon receiving the ID request signal from the display apparatus 10, the external apparatus 200 may transmit a control signal to the display apparatus 10 so that the display apparatus 10 can display a selection screen, which allows the user to choose whether to set an ID or display a video signal without any delay time.

Although it has been illustrated in this exemplary embodiment that the ID stored in the storing part 11 is a numerical value, the ID may be set to be a character if only the character may correspond to a specified numerical for calculation of a delay time.

In addition, for re-setting of an ID, the external apparatus 200 may check whether or not the plurality of display apparatuses 100 constituting the video wall has a duplicated ID, and inform the user of ID duplication in order to avoid the ID duplication.

As apparent from the above description, the present invention provides a display apparatus, which is capable of being powered on with a delay time calculated based on an ID assigned to the display apparatus and a predetermined delay constant, and a control method thereof.

Although a few embodiments of the present invention have been shown and described, it will be appreciated by those skilled in the art that changes may be made in these embodiments without departing from the scope of the present invention as defined in the appended claims.

## Claims

1. A display apparatus comprising:
a video processing part (12) configured to process a video signal input from an external apparatus (200), the external apparatus (200) supplying the video signal and a control signal to the display apparatus;
a video displaying part (13) configured to display the video signal processed by the video processing part (12);
a storing part (11) that stores an identification (ID) of the display apparatus, the ID being input by a user; and
a controller (14) configured to control power supply to the video displaying part (13) after a delay time corresponding to the ID of the display apparatus when the control signal is applied to the controller (14).

2. The display apparatus according to claim 1, wherein the control signal comprises a power application signal for applying power to the display apparatus.

3. The display apparatus according to claim 1 or 2, wherein the controller (14) is configured to calculate the delay time for the ID based on the ID and a predetermined delay constant and set the delay time based on a result of the calculation.

4. The display apparatus according to any one of the preceding claims, wherein, when the ID is not stored in the storing part (11), the controller (14) controls power supply to the video processing part (12) without the delay time.

5. The display apparatus according to claim 4, wherein, when the ID is not stored in the storing part (11), the controller (14) controls the video processing part (12) to generate a User Interface (UI) screen to allow the user to set the ID.

6. The display apparatus according to claim 3 or 4, wherein, when the ID is not stored in the storing part (11), the controller (14) controls the video processing part (12) to generate a selection screen to allow the user to choose whether to set the ID or display the video signal without the delay time.

7. A multi-display system including a plurality of display apparatuses (10, 20, 30, 40) according to any one of the preceding claims, all receiving video signals and control signals from one external apparatus (200), wherein each of the display apparatuses has a different ID such that the delay time for each display apparatus is different.

8. A control method of a display apparatus, comprising:
receiving a video signal and a control signal from an external apparatus (200); and
supplying power to a video displaying part of the display apparatus after a delay time corresponding to a pre-stored ID of the display apparatus when the control signal is received in the display apparatus.

9. The control method according to claim 8, wherein the receiving the control signal comprises receiving a power application signal for applying power to the display apparatus.

10. The control method according to claim 8 or 9, wherein the delay time is obtained through calculation of the delay time for the ID based on the ID and a predetermined delay constant.

11. The control method according to any one of the preceding claims, further comprising: when there is no pre-stored ID, supplying power to the video displaying part without the delay time.

12. The control method according to claim 11, further comprising: when there is no pre-stored ID, generating a User Interface (UI) screen to allow a user to set the ID.

13. The control method according to claim 9 or 10, further comprising: when there is no pre-stored ID, generating a selection screen to allow a user to choose whether to set the ID or display the video signal without the delay time.

14. A control method of a multi-display system comprising a plurality of display apparatuses (10, 20, 30, 40), the method comprising controlling each display apparatus (10,20, 30, 40) according to the method of any one of the preceding claims, wherein each display apparatus has a different pre-stored ID and power is supplied to each display apparatus after a different delay time.
